# EUROPÄISCHE PATENTANMELDUNG

(11) **EP 1 369 972 A1**
(43) Veröffentlichungstag der Anmeldung: **10.12.2003**
(21) Anmeldenummer: 03003646.1
(22) Anmeldetag: 18.02.2003
(51) Int. Cl.: H02G 3/12, H01R 13/629

(54) **Kabelkanal zur Abdeckung von elektrischen Kabeln sowie zur Halterung von Steckern**

(30) Priorität: 04.06.2002 DE 20208634 U
(71) Anmelder: ROBERT BOSCH GMBH, 70442 Stuttgart (DE)
(72) Erfinder: Weber, Dietmar, 71732 Tamm (DE)

(57) **Zusammenfassung**

Die Erfindung betrifft einen Kabelkanal zur Abdeckung von elektrischen Kabeln sowie zur Halterung von Steckern. Erfinderisch ist vorgesehen, im Bereich der Stecker (4) einen Indikator (7) vorzusehen, der die Lage (Stellung I, Stellung II) des Steckers (4) in Bezug auf dessen Verrastung mit einem Gegenstecker (5) anzeigt.

## Beschreibung

Die Erfindung betrifft einen Kabelkanal zur Abdeckung von elektrischen Kabeln sowie zur Halterung von Steckern.

### Stand der Technik

Kabelkanäle sind dazu vorgesehen, um elektrische Leitungen abzudecken und um elektrische Kabel in sich aufzunehmen, um diese vor Beschädigungen, Schmutz oder dergleichen zu schützen.

Eine im Automobilbau bekannte Ausführungsform von Kabelkanälen sieht vor, Stecker bereits in Kabelkanäle zu integrieren, so dass mit Aufsetzen des Kabelkanals gleichzeitig Steckverbindungen mit dem Stecker hergestellt werden können.

Die einzelnen Stecker zur Herstellung einer Steckverbindung sind vorzugsweise in den Kabelkanal eingeclipst. Alternativ hierzu ist vorgesehen, dass diese bereits bei der Fertigung eines Kabelkanals integriert werden. Die Stecker befinden sich somit schon in der Position/Lage, aus der sie auf einen Gegenstecker gesteckt werden können. Der Kabelkanal selbst kann je nach Anforderung entweder sehr steif oder auch weicher ausgelegt werden.

### Nachteile des Standes der Technik

Durch das Anbringen des Kabelkanals zusammen mit dem in dem Kabelkanal integrierten Steckern werden gleichzeitig entsprechende Steckverbindungen mit Gegensteckern hergestellt. Insbesondere bei sehr unübersichtlicher Montageanordnung ist es für denjenigen, der den Kabelkanal anbringt, in der Regel nahezu unmöglich, festzustellen, ob die entsprechenden Steckverbindungen auch eingegangen sind. Hieraus ergibt sich der Nachteil, dass die Funktionsfähigkeit eines solchen Kabelkanals mit integrierten Steckverbindungen nicht immer gewährleistet ist.

### Aufgabe der Erfindung

Die Aufgabe der Erfindung ist es, einen Kabelkanal der vorstehenden Art derart weiter zu bilden dass die Nachteile des Standes der Technik vermieden werden.

### Lösung der Aufgabe

Das Grundprinzip der Lösung der Aufgabe besteht darin, einen Indikator zu schaffen, der demjenigen, der den Kabelkanal montiert, unmittelbar anzeigt, dass die vorgesehenen Steckverbindungen funktionsgerecht hergestellt sind.

Durch eine sehr einfache Weiterbildung des Kabelkanals wird demjenigen, der den Kabelkanal und die Steckverbindung montiert, durch eine Erhöhung im Bereich des Steckers angezeigt, dass eine Steckverbindung nicht fachgerecht hergestellt worden ist.

Dies wird dadurch erreicht, dass senkrecht zur Längserstreckung des Kabelkanals zwei Schlitze vorgesehen sind, so dass eine dachartige Ausbildung des Kabelkanals sich ausbildet, wenn der Stecker nicht unmittelbar mit dem Gegenstecker in Verbindung getreten ist, da dieser zusammen mit dem Indikator aus der ansonsten planen Oberfläche des Kabelkanals hervorsteht. So ist es für denjenigen, der die Montage durchführt, sehr einfach ersichtlich, welche Steckverbindung fachgerecht hergestellt worden ist und welche nicht.

Eine alternative Ausführungsform des Indikators kann darin bestehen, dass der Kabelkanal in den Bereichen der Steckverbindung Aussparungen vorsieht, in die die einzelnen Stecker zusammen mit dem Indikator ein-clipsbar sind. Erst wenn die Steckverbindung funktionsgerecht hergestellt worden ist, bildet der Indikator zusammen mit dem übrigen Kanal eine plane Oberfläche. Dies zeigt demjenigen, der die Montage ausführt, dass die Steckverbindung funktionsgerecht hergestellt worden ist.

Weitere vorteilhafte Ausgestaltungen gehen aus der nachfolgenden Beschreibung sowie den Ansprüchen und den Zeichnungen hervor.

### Zeichnungen

Es zeigen
- Fig. 1: Eine Seitenansicht auf eine Prinzipdarstellung der Funktionsweise des erfinderischen Kabelkanals zusammen mit Stecker und Gegenstecker;
- Fig. 2: Eine Vorderansicht auf den Kabelkanal gemäß Fig. 1, wobei der Stecker mit dem Gegenstecker nicht verrastet ist;
- Fig. 3: Eine Draufsicht auf den erfindungsgemäßen Kabelkanal gemäß Fig. 1.

### Beschreibung eines Ausführungsbeispieles

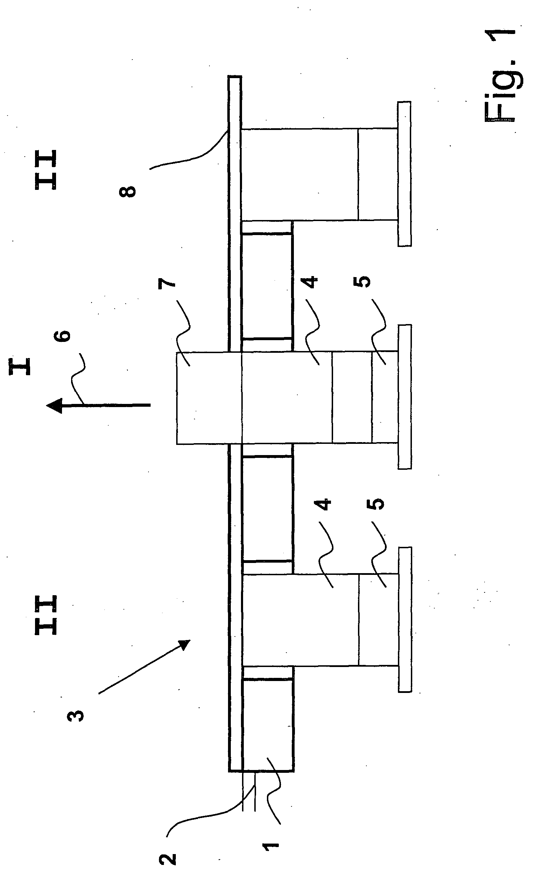

In den Fig. 1 - 3 ist ein Kabelkanal 1 dargestellt, der elektrische Leitungen 2 abdeckt bzw. aufnimmt und zusätzlich Halterungen 3 für Stecker 4 aufweist, wobei die Stecker 4 mit Gegensteckern 5 koppelbar sind.

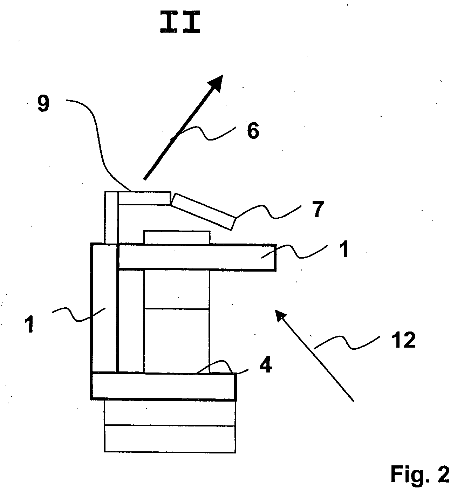

In einem Vormontagezustand ist der Stecker 4 in den Kabelkanal 1 zusammen mit den Leitungen 2 angeordnet. Der Stecker 4 befindet sich dabei in einer Stellung I, wie in Fig. 1 dargestellt. Der Stecker 4 erstreckt sich dabei in Pfeilrichtung 6 und drückt dabei in Pfeilrichtung 6 einen Indikator 7, so dass dieser Indikator 7 über der Oberfläche 8 des Kabelkanals 1, wie auch in Fig. 2 dargestellt, erstreckt. Der Indikator 7 wird durch vorzugsweise senkrecht zur Längserstreckung des Kabelkanals 1 verlaufende Schlitze 13 gebildet.

Diese Stellung I zeigt demjenigen, der den Kabelkanal 1 montiert, an, dass die Steckverbindung zwischen Stecker 4 und Gegenstecker 5 nicht funktionsgerecht hergestellt ist. Durch Drücken des Indikators 7 entgegen des Pfeils 6 wird erreicht, dass der Stecker 4 mit dem Gegenstecker eine Steckverbindung eingeht und eine Stellung erreicht, wie sie in Fig. 1, II dargestellt ist. Der Indikator 7 nimmt dabei eine Stellung ein, die derart gestaltet ist, dass dessen Oberfläche 9 mit der Oberfläche 8 des Kabelkanals nahezu bündig Ist.

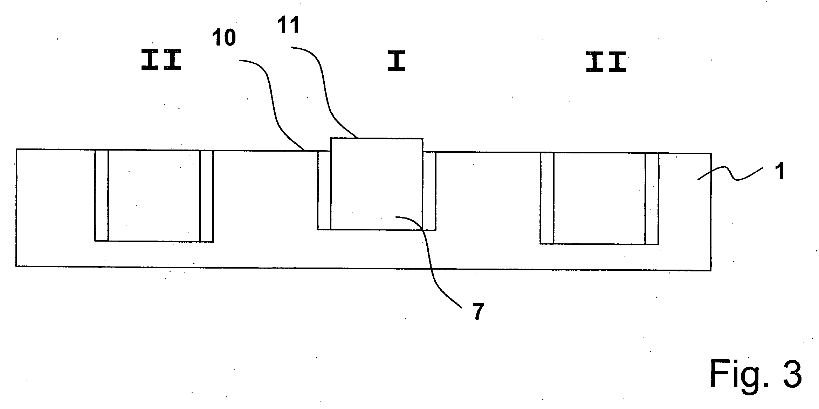

Eine Weiterbildung, wie sie in Fig. 3 dargestellt ist, kann vorsehen, dass eine nicht funktionsgerecht hergestellte Steckverbindung (Position I) auch in Draufsicht erkennbar ist, in dem der Indikator 7 über den Seitenrand 10 des Kabelkanals 1 übersteht. Erst bei funktionsgerecht hergestellter Steckverbindung ist die Aussenkante 11 des Indikators 7 mit dem Seitenrand 10 des Kabelkanals bündig.

Um eine einfache Herstellung eines solchen Indikators 7 zusammen mit dem Stecker 4 zu gewährleisten, ist vorgesehen, den Indikator 7 im Bereich 12, wie er in Fig. 2 dargestellt ist, in den Kabelkanal 1 einzuclipsen. Gleichzeitig ist der Stecker 4 mit dem Indikator verbunden, so dass Indikator 7 und Stecker 4 eine Baueinheit bilden, die in den Kabelkanal 1 einbringbar ist.

Zur Montage des gesamten Kabelkanals 1 wird der vollständig hergestellte Kabelkanal 1 zusammen mit den Steckern 4 auf die Gegenstecker 5 aufgesetzt und sequenziell die einzelnen Indikatoren 7 zusammen mit den Steckern 4 entgegen der Pfeilrichtung 6 bewegt. Eine Abschlusskontrolle zeigt dann, unabhängig ob in Seitenansicht oder Draufsicht, ob die Stellung I oder Stellung II, d.h. eine funktionsgerechte Steckverbindung eingegangen worden ist oder nicht.

Durch eine sehr vereinfachte Modifikation eines herkömmlichen Kabelkanals ist erreicht worden, dass eine sehr einfache und zuverlässige Kontrollfunktion für die Herbeiführung einer Steckverbindung geschaffen worden ist.

## Patentansprüche

1. Kabelkanal zur Abdeckung von elektrischen Kabeln sowie zur Halterung von Steckern, **dadurch gekennzeichnet, dass** im Bereich der Stecker ein Indikator (7) vorgesehen ist, der die Lage des Steckers (Stellung I oder Stellung II) in Bezug auf deren Verrasterung mit einem Gegenstecker (5) anzeigt.

2. Kabelkanal nach Anspruch 1, **dadurch gekennzeichnet, dass** der Indikator (7) durch zwei parallel zueinander und quer zur Längserstreckung des Kabelkanals (1) verlaufende Schlitze (13) gebildet ist, die derart ausgestaltet sind, dass bei nichteingegangener Verrasterung (Stellung I) der Indikator (7) von der übrigen Oberfläche (8) des Kabelkanals (1) absteht, wobei eine Seite des Indikators (7) scharnierartig an dem Kabelkanal (1) angelenkt ist.

3. Kabelkanal nach Anspruch 1, **dadurch gekennzeichnet, dass** im Bereich des Steckers (4) für den Indikator (7) ein weicher Kunststoff vorgesehen ist.

4. Kabelkanal nach mindestens einem der vorhergehenden Ansprüche, **dadurch gekennzeichnet, dass** Stecker (4) und Indikator (7) eine Baueinheit bilden.

5. Kabelkanal nach Änspruch 4, **dadurch gekennzeichnet, dass** Stecker (4) und Indikator (7) in den Kabelkanal (1) einclipsbar sind.
